# EUROPÄISCHE PATENTSCHRIFT

(11) **EP 2 834 103 B1**
(45) Veröffentlichungstag und Bekanntmachung des Hinweises auf die Patenterteilung: **09.03.2016**
(21) Anmeldenummer: 13715140.3
(22) Anmeldetag: 02.04.2013
(51) Int. Cl.: B60R 16/03, B60K 28/14, B60W 50/029, B60R 21/00

(54) **VERFAHREN ZUM BETRIEB EINES KRAFTFAHRZEUGS WÄHREND UND/ODER NACH EINER KOLLISION**
METHOD FOR OPERATING A MOTOR VEHICLE DURING AND/OR FOLLOWING A COLLISION
PROCÉDÉ PERMETTANT DE FAIRE FONCTIONNER UN VÉHICULE AUTOMOBILE PENDANT ET/OU APRÈS UNE COLLISION

(30) Priorität: 05.04.2012 DE 102012007119
(43) Veröffentlichungstag der Anmeldung: 11.02.2015
(73) Patentinhaber: Audi AG, 85045 Ingolstadt (DE)
(72) Erfinder: BRENNEIS, Oliver, 85748 Garching (DE); FREYER, Jörn, 81827 München (DE); HANTSCHKE, Christopher, 85080 Gaimersheim (DE)
(74) Vertreter: Thielmann, Frank
(86) Internationale Anmeldenummer: PCT/EP2013/000969
(87) Internationale Veröffentlichungsnummer: WO 2013/149720

(56) Entgegenhaltungen:
- WO-A1-2004/078527
- DE-A1- 4 208 011
- DE-A1-102008 008 555
- JP-A- 2005 238 934
- US-A1- 2004 256 169

## Beschreibung

Die Erfindung betrifft ein Verfahren nach dem Oberbegriff des Anspruchs 1 zum Betrieb eines Kraftfahrzeugs, insbesondere der Energieversorgung eines Kraftfahrzeugs, während und/oder im Zeitraum nach einer Kollision, wobei eine wenigstens teilweise Stromlosschaltung des Kraftfahrzeugs erfolgt. Daneben betrifft die Erfindung ein Kraftfahrzeug mit wenigstens einem zur Ausführung des Verfahrens ausgebildeten Steuergeräts.

Aktive und passive Sicherheitssysteme, die insbesondere zur Kollisionsvermeidung und/oder Kollisionsfolgenminderung ausgebildet sind, sind im Stand der Technik bereits bekannt. Beispielsweise können solche Systeme überprüfen, meist anhand einer Kollisionswahrscheinlichkeit, ob das Risiko einer Kollision vorliegt, so dass dann durch verschiedene Maßnahmen versucht werden kann, eine Kollision zu vermeiden und/oder zumindest die entstehenden Schäden bei einer Kollision gering zu halten. Maßnahmen können dabei aktive Fahreingriffe umfassen, jedoch auch die allgemeine Sicherheit des Kraftfahrzeugs erhöhende Maßnahmen, wie das Aufstellen einer Motorhaube, und/oder die Ausgabe von Warnungen und/oder Anweisungen sowie die Ansteuerung weiterer Fahrzeugsysteme, beispielsweise zur Präkonditionierung. Beispielsweise ist es bekannt, im Vorfeld einer möglichen oder unvermeidlichen Kollision die Betriebsparameter von Fahrzeugsystemen im Hinblick auf die spezielle Situation anzupassen, so dass beispielsweise Totzeiten reduziert werden können und dergleichen.

Liegt eine unvermeidliche Kollision vor, reichen also selbst durch Fahreingriffe die dynamischen Möglichkeiten des Kraftfahrzeugs nicht mehr aus, eine Kollision mit einem Kollisionspartner zu vermeiden, kann es nach der Erstkollision noch zu weiteren Problemen, beispielsweise Folgekollisionen, kommen. Jedoch ist bei heutigen Kraftfahrzeugen, wenn eine Kollision eine gewisse Kollisionsschwere überschreitet, wofür beispielsweise wenigstens ein Kollisionsschwerewert betrachtet werden kann, der größer als ein Grenzwert sein muss, vorgeschlagen worden, das Kraftfahrzeug komplett stromlos zu schalten, das bedeutet, die wenigstens eine elektrische Energiequelle des Kraftfahrzeugs, insbesondere wenigstens eine Batterie, von sämtlichen Verbrauchern zu trennen. Auf diese Weise soll nicht nur vermieden werden, dass es durch Schäden im Energieversorgungssystem des Kraftfahrzeugs zu für den Fahrer gefährlichen Hochspannungen kommt oder gefährliche Situationen durch das Weiterbetreiben von elektrischen Komponenten erst ausgelöst werden, insbesondere Brände, es soll auch ein Schutz für Bergungskräfte geschaffen werden, die gegebenenfalls an dem Kraftfahrzeug hantieren müssen. Mithin sind also Kraftfahrzeuge bekannt, die bei einem einen Grenzwert überschreitenden Kollisionsschwerewert die Hauptenergieversorgung von den Verbrauchern abtrennen, meist bereits während, zumindest aber unmittelbar nach der Kollision, um sicherzustellen, dass es für dieses die Energie abtrennende Sicherheitssystem keinen Ausfall gibt.

Auf diese Weise werden jedoch auch die Sicherheitssysteme des Kraftfahrzeugs stromlos geschaltet, so dass insbesondere nach einem Erstunfall, also der Kollision, keine erneute Auslösung von Sicherheitssystemen mehr möglich ist. Dies erhöht die Unfallschwere bei Folgekollisionen, nachdem nach der Erstkollision keine unfallschweremildernden Maßnahmen für eine Folgekollision mehr eingeleitet werden können.

In der nachveröffentlichten deutschen Patentanmeldung DE 10 2011 115 223.0 wurde in diesem Kontext vorgeschlagen, bei einem Verfahren zum Betrieb eines Sicherheitssystems eines Kraftfahrzeugs, insbesondere eines Systems zur Kollisionsfolgenminderung bei einer unvermeidlichen Kollision, vorzusehen, dass bei einer unvermeidlichen Kollision durch das Sicherheitssystem eine einer im Hinblick auf Zweitkollisionen sicheren Zielstellung zugeordnete, nach der Kollision zu realisierende Zieltrajektorie des Kraftfahrzeugs ermittelt wird und wenigstens ein autonomer und/oder unterstützender Fahreingriff in Form wenigstens eines Längsführungseingriffs und/oder Querführungseingriffs zur Realisierung der Zieltrajektorie vorgenommen wird, um die Sicherheit im Hinblick auf Folgekollisionen nach einer Erstkollision zu erhöhen. Es soll also letztlich eine sichere Zielstellung, bei der die Folgekollisionswahrscheinlichkeit möglichst gering ist, eingenommen werden.

WO 2004/078527 A1, die die Merkmale des Oberbegriffs des Anspruchs 1 offenbart, betrifft eine ADR-Einheit für ein Kraftfahrzeug, welche die Batterie von einem elektrischen System des Kraftfahrzeugs abkoppeln kann und für eine Zeitverzögerung der Abkopplung nach einem bestimmten Ereignis sorgen kann. Ein zusätzlicher Ausgang der ADR-Einheit kann selbst bei abgetrennter Batterie sicherheitsbezogene Funktionen erhalten, beispielsweise ein integriertes Telefon oder eine Warnblinkanlage. Im Fall einer durch einen Kollisionssensor ermittelten Kollision bleiben diese Funktionen auch aktiv.
Der Erfindung liegt daher die Aufgabe zugrunde, ein Verfahren anzugeben, das es ermöglicht, die Sicherheit des Kraftfahrzeugs während und/oder nach einer Kollision sowohl im Hinblick auf die elektrische Energieversorgung als auch im Hinblick auf Folgekollisionen zu erhöhen.
Zur Lösung dieser Aufgabe sind erfindungsgemäß die Merkmale des Anspruchs 1 vorgesehen.
Dabei kann das Verfahren beispielsweise durch ein dediziertes Steuergerät des Kraftfahrzeugs durchgeführt werden, wobei jedoch eine Verteilung der Funktionen auf mehrere Steuergeräte denkbar ist. Letztlich wird erfindungsgemäß das Energiemanagement des Kraftfahrzeugs im Hinblick auf die besonderen Umstände einer Kollision erweitert, indem kollisionsbezogene Kriterien für jedes Fahrzeugsystem des Kraftfahrzeugs ausgewertet werden, so dass letztlich eine stufenweise Abschaltung der Fahrzeugsysteme des Kraftfahrzeugs erfolgt, bis idealerweise alle Fahrzeugsysteme stromlos geschaltet sind, das bedeutet, von der elektrischen Energiequelle, insbesondere wenigstens einer Batterie, getrennt sind. Dies ermöglicht es, Fahrzeugsysteme, die noch zur Erhöhung der Sicherheit nach der Kollision beitragen können, zunächst aktiv zu halten, während Systeme, die zur Erhöhung der Sicherheit nicht erforderlich sind oder dieser gar abträglich sind, möglichst schnell, insbesondere unmittelbar nach der Kollision, deaktiviert werden können. Sind Fahrzeugsysteme, insbesondere Sicherheitssysteme, die die Sicherheit nach der Kollision erhöhen können, noch aktiv, ist es mithin denkbar, selektiv nach der Erstkollision Maßnahmen auszulösen, so dass sich insgesamt eine Erhöhung der Sicherheit sowohl im Hinblick auf die elektrische Energieversorgung wie auch durch Sicherheitssysteme durchzuführende Maßnahmen ergibt. Dies gelingt durch die Berücksichtigung von Kriterien, die speziell auf das Vorliegen eines solchen Unfalls abgestimmt sind, insbesondere auch auf das Vorliegen des konkreten Unfalls.

Das erfindungsgemäßes Verfahren kann also sicherstellen, dass die Fahrzeugsysteme, die die Sicherheit des Kraftfahrzeugs noch erhöhen können, weiter mit elektrischer Energie versorgt werden, um ihre Maßnahmen noch durchzuführen. Auf diese Weise kann die Unfallschwere von Folgeunfällen reduziert werden und die Sicherheit für den Fahrer und die Insassen kann erhöht werden.

Im Rahmen eines Kriteriums werden die Fahrzeugsysteme in wenigstens zwei Klassen von Fahrzeugsystemen eingeteilt, wobei die Stromversorgung wenigstens teilweise in Abhängigkeit der Klassenzugehörigkeit des Fahrzeugsystems ermittelt wird. Alle Fahrzeugsysteme werden also in wenigstens zwei Klassen eingeteilt, die zumindest teilweise die weitere Behandlung dieser Fahrzeugsysteme im Hinblick auf die Stromversorgung, insbesondere unmittelbar nach einer Kollision, bestimmen.

Dabei kann beispielsweise vorgesehen sein, dass wenigstens eine erste Klasse von während und/oder nach der Kollision, insbesondere zu Beginn und/oder nach Abschluss der Kollision, unmittelbar stromlos zu schaltender Fahrzeugsysteme verwendet wird. Es können also beispielsweise Fahrzeugsysteme identifiziert werden, die unmittelbar von der Stromversorgung abgetrennt werden müssen, so dass hier auch keinerlei Probleme durch weiter fließende elektrische Energie auftreten können. Eine derartige Klasse von Fahrzeugsystemen kann im Übrigen bereits bei der Auslegung der Stromverteilung im Kraftfahrzeug berücksichtigt werden, so dass beispielsweise für alle Fahrzeugsysteme dieser ersten Klasse ein einziger Schalter vorgesehen sein kann, der, insbesondere unmittelbar nach der Kollision, geöffnet wird, um somit weiteren Stromfluss zu diesen Fahrzeugsystemen zu unterbinden. Beispiele für Fahrzeugsysteme, die der ersten Klasse zugeordnet werden können, sind beispielsweise die Kraftstoffpumpe und/oder die Komfortelektronik und/oder eine Heckscheibenheizung und/oder Infotainmentsysteme und dergleichen. Wird beispielsweise eine Kraftstoffpumpe unmittelbar während und/oder nach der Kollision stromlos geschaltet, wird vermieden, dass beispielsweise bei einer defekten Kraftstoffleitung weiterhin Kraftstoff aus dem Leck herausgepumpt wird, der sich entzünden könnte. Komfortelektronik, beispielsweise Multimedia-Systeme und dergleichen können genauso wenig zur Erhöhung der Sicherheit des Kraftfahrzeugs beitragen wie beispielsweise Komponenten einer Klimaanlage, beispielsweise ein Klimasteuergerät und/oder ein Klimakompressor. Systeme, die in die erste Klasse fallen, sind mithin hauptsächlich solche, für die gesagt werden kann, dass sie nicht zur Erhöhung der Sicherheit beitragen können und gleichzeitig auch keine wesentlichen Daten für Fahrzeugsysteme, die die Sicherheit des Kraftfahrzeugs noch erhöhen können, liefern.

Ferner kann vorgesehen sein, dass eine zweite Klasse von unabhängig erst nach Durchführung einer Sicherungsaktion stromlos zu schaltenden Fahrzeugsystemen verwendet wird, wobei die Fahrzeugsysteme der zweiten Klasse nach Durchführung der Sicherungsaktion stromlos geschaltet werden. Bei der so definierten zweiten Klasse von Fahrzeugsystemen handelt es sich um Fahrzeugsysteme, insbesondere Sicherheitssysteme, die über eine bestimmte, klar definierte Aktion in jedem Fall die Sicherheit des Kraftfahrzeugs, insbesondere im Hinblick auf eine Folgekollision, erhöhen können. Ein klassisches Beispiel hierfür ist die anstellbare Motorhaube, deren Anstellung nach einem schweren Unfall im Hinblick auf Folgekollisionen grundsätzlich sinnvoll ist. Ein anderes Beispiel für Systeme der zweiten Klasse ist beispielsweise ein Sicherheitssystem, das die Fahrzeughöhe durch Fahrwerkhöheneinstellungen anpasst, insbesondere im Hinblick auf die Crashkompatibilität. Allgemein kann gesagt werden, dass sogenannte Pre-Crash-Maßnahmen, mithin Kollisionen vorbereitende Maßnahmen, soweit diese nicht bereits abgeschlossen sind, vervollständigt werden können oder gestartet werden können. Es kann mithin ein komplettes Pre-Crash-Konzept von Default-Maßnahmen gegeben sein, die das Fahrzeug in einen im Hinblick auf eine Kollision, hier auch eine Folgekollision, möglichst sicheren Zustand bringen. Neben den bereits genannten Beispielen kann dabei insbesondere ein Schiebedach geschlossen werden, Sitze können in eine bestimmte Position verfahren werden und dergleichen. Das erfindungsgemäße Verfahren stellt nun vor der Stromlosschaltung der für diese Maßnahmen verantwortlichen Fahrzeugsysteme sicher, dass diese Maßnahmen (soweit möglich, worauf im Folgenden noch näher eingegangen werden wird) auch tatsächlich stattgefunden haben oder noch stattfinden. Wurden beispielsweise die Sicherungsaktionen bereits vor der Kollision durchgeführt, können entsprechende Fahrzeugsysteme der zweiten Klasse auch unmittelbar stromlos geschaltet werden, während dann, wenn die Sicherungsaktion noch durchführbar ist, zunächst deren Durchführung angestoßen wird, indem eine entsprechende Ansteuerung des Fahrzeugsystems der zweiten Klasse erfolgt, welche auch durch das das erfindungsgemäße Verfahren durchführende Steuergerät erfolgen kann. Ist die Sicherungsaktion abgeschlossen, kann das entsprechende Fahrzeugsystem stromlos geschaltet werden. Wie bereits dargelegt, ist es in diesem Zusammenhang besonders vorteilhaft, wenn durch die Sicherungsaktionen das Kraftfahrzeug in wenigstens einen vordefinierten Sicherheitszustand verbracht wird.

Ein weiteres Beispiel für Fahrzeugsysteme der zweiten Klasse sind auch Schließsysteme. So kann beispielsweise vorgesehen sein, dass vor dem Deaktivieren des entsprechenden Fahrzeugsystems sichergestellt wird, dass der Kofferraum frei zugänglich ist, insbesondere also nicht verschlossen ist. So ist der Zugriff auf gegebenenfalls dort angeordnete Hilfsmittel, insbesondere ein Warndreieck, einen Verbandskasten und dergleichen möglich. Auch weiterhin mit Strom versorgt werden kann ein einen Notruf absetzendes Fahrzeugsystem, welches beispielsweise eine Telefonverbindung nutzen kann, um eine Leitstelle über den Unfall zu informieren, insbesondere unter Übersendung weiterer Daten wie dem Unfallort, bis eine Bestätigung oder dergleichen erhalten wird. Solche Systeme können auch als "emergency call systems" bezeichnet werden.

In jedem Fall wird eine dritte Klasse von von anderen Fahrzeugsystemen und/oder vorliegenden Daten abhängigen Fahrzeugsystemen bei Erfüllung eines Nichtverfügbarkeit einer oder mehrerer vordefinierter anderer Fahrzeugsysteme und/oder Daten anzeigenden Verfügbarkeitskriteriums stromlos geschaltet. Neben den in der zweiten Klasse enthaltenen Fahrzeugsystemen gibt es solche, die Maßnahmen zur Erhöhung der Sicherheit des Kraftfahrzeugs nur dann durchführen können, wenn sie mit anderen Fahrzeugsystemen zusammenarbeiten, also beispielsweise eine Lenkung oder dergleichen ansteuern und/oder Daten von Sensoren erhalten können, oder die vom Vorliegen bestimmter Daten abhängen. Daher wird nun erfindungsgemäß kontinuierlich überwacht, ob mit dem Fahrzeugsystem, insbesondere aufgrund seiner Verknüpfung mit weiteren Fahrzeugsystemen, überhaupt noch auf sinnvolle Art und Weise Aktionen zur Erhöhung der Sicherheit durchführbar sind. Ein einfaches Beispiel für ein solches Fahrzeugsystem ist beispielsweise ein mehrstufiges Airbagsystem, welches mithin nach einer ersten Auslösung noch ein zweiten Mal bei einer weiteren Kollision ausgelöst werden kann. Ein solches Airbagsystem ist immer dann nicht mehr sinnvoll einsetzbar, wenn die Kollisionssensoren als weiteres Fahrzeugsystem ausgefallen sind, das Airbagsystem mithin keinerlei Information darüber erhalten kann, wann es denn ein zweites Mal auslösen soll. Mithin kann beispielsweise ein derartiges mehrstufiges Airbagsystem dann aktiviert werden, wenn bei einer entsprechenden Überprüfung, insbesondere einer Diagnose, festgestellt wurde, dass ihm zugeordnete Kollisionssensoren nicht mehr zur Verfügung stehen und die Information auch nicht anderweitig gewonnen werden kann.

In einem anderen Beispiel für ein Fahrzeugsystem der dritten Klasse kann ein ESP-System, beispielsweise während eines Schleudervorgangs, keine sinnvollen Gegensteueraktionen mehr vornehmen, wenn es keine Informationen einer Inertialplattform, also insbesondere Giergeschwindigkeiten und dergleichen, mehr erhält. Beispiele für Fahrzeugsysteme der dritten Klasse sind auch Sicherheitssysteme, wie sie in der bereits erwähnten, nachveröffentlichten DE 10 2011 115 223.0 genannt sind, die mithin versuchen, Umfelddaten und Egodaten des Kraftfahrzeugs auszuwerten, um Fahreingriffe vorzunehmen. Hier muss selbstverständlich sichergestellt sein, dass eine hinreichende Datenbasis für Entscheidungen vorhanden ist, genau wie sichergestellt sein muss, dass auch ausführende Komponenten vorhanden sind, um die gewünschten Maßnahmen umzusetzen. Mithin können zusammenfassend Kriterien formuliert werden, unter denen der Betrieb eines Fahrzeugsystems noch sinnvoll ist, wobei selbstverständlich auch Fälle betrachtet werden, in denen ein Fahrzeugsystem Daten einer nachgelagertes Fahrzeugsystem liefert, welches dann Aktionen durchführen kann. Steht das nachgelagerte Fahrzeugsystem noch zur Verfügung, darf auch das Daten liefernde Fahrzeugsystem nicht unbedingt deaktiviert werden.

Dabei sei an dieser Stelle noch darauf hingewiesen, dass es auch im Rahmen der vorliegenden Erfindung liegt, Daten liefernde Fahrzeugsysteme zu ersetzen, was insbesondere immer dann möglich ist, wenn vor der Kollision aufgenommene gleichartige Daten ausreichen, die jetzigen Daten zu kennen oder zumindest mit einer bestimmten Sicherheit abzuschätzen. Beispielsweise kann hierbei ein Umfeldmodell betrachtet werden. Umfeldmodelle sind im Stand der Technik bereits grundsätzlich bekannt und existieren in verschiedenen Ausprägungen, in denen jedoch üblicherweise Bereichen und/oder Objekten verschiedene Attribute zugeordnet sind. Befindet sich das Kraftfahrzeug noch in demselben Umfeld, so können viele vor der Kollision aufgenommenen Daten, insbesondere über statische Objekte, weiterverwertet werden, auch wenn Sensoren, die diese Daten auffrischen würden, nicht mehr zur Verfügung stehen. Es kann also letztlich eine ständige Überwachung von Datenquellen, insbesondere Sensoren, stattfinden, die durch die Kollision beschädigt werden könnten. Liegt eine solche Beschädigung vor, ist es denkbar, auf deren vor der Kollision aufgezeichnete Daten zurückzugreifen. Diagnosefunktionen, die einen Ausfall von Sensorik oder sonstigen Datenquellen, insbesondere auch weiterer Fahrzeugsysteme, melden, sind bereits grundsätzlich bekannt, jedoch kann vorliegend auch ein Ausbau dieser Diagnosefunktionen im Hinblick auf die Genauigkeit der Aussagen über die Beschädigung vorgesehen werden. Ist beispielsweise ein Sensor grundsätzlich noch funktionsfähig, befindet er sich jedoch in einer durch die Kollision bedingten falschen, insbesondere sinnvolle Messdaten verhindernden Ausrichtung, kann er dennoch als aktuell nicht verlässlich oder nur teilweise verlässlich gekennzeichnet werden, insbesondere auch stromlos geschaltet werden. Solche Informationen können beispielsweise durch eine Plausibilitätsüberprüfung von aufgenommenen Sensordaten gewonnen werden. Insgesamt ist es im Rahmen der vorliegenden Erfindung also denkbar, auch Daten zu verwenden, die vor und/oder während der Kollision ermittelt wurden, insbesondere, indem diese in die Zukunft prädiziert werden oder von im Wesentlichen unveränderten Daten ausgegangen wird.

Im Hinblick darauf, dass es ein Ziel des erfindungsgemäßen Betriebsverfahrens sein kann, das Kraftfahrzeug letztlich völlig stromlos schalten zu können, können selbstverständlich weitere dem Verfügbarkeitskriterium insbesondere nachgeschaltete Kriterien verwendet werden. So kann vorgesehen sein, dass ein nicht durch das Verfügbarkeitskriterium stromlos geschaltetes Fahrzeugsystem bei Erfüllung wenigstens eines weiteren, die Durchführung einer Sicherungsaktion und/oder die Nichtverfügbarkeit die Sicherheit des Kraftfahrzeugs erhöhender Sicherungsaktion und/oder den Ablauf einer bestimmten Zeitdauer beschreibenden Kriteriums stromlos geschaltet werden. Auch wenn mithin Fahrzeugsysteme noch grundsätzlich funktionsfähig wären, ist es nur dann sinnvoll, sie weiterzubetreiben, wenn es auch sinnvolle Maßnahmen, also Sicherungsaktionen, gibt, die diese durchführen können. Liegt Derartiges nicht mehr vor, oder wurden alle sinnvollen Sicherungsaktionen bereits durchgeführt kann das Fahrzeugsystem deaktiviert werden. Es ist jedoch auch denkbar, eine vorbestimmte Zeitdauer vorzusehen, nach der die Fahrzeugsysteme dennoch stromlos geschaltet werden.

Wie bereits erwähnt, kann es vorgesehen sein, dass als Daten vor der Kollision ermittelte Umfelddaten eines Umfeldmodells betrachtet werden. Ein solches Umfeldmodell kann auch dann, wenn bestimmte Datenquellen, insbesondere Sensoren, ausgefallen sind, durch prädizierte Daten, insbesondere bezüglich bewegter Objekte, ergänzt werden. Auf diese Weise kann auch bei Ausfall von Sensoren zumindest für eine bestimmte Zeitspanne noch ermöglicht werden, dass das Umfeldmodell nutzende Fahrzeugsysteme weiterbetrieben werden können, um die Sicherheit des Kraftfahrzeugs, insbesondere im Hinblick auf Folgekollisionen, zu erhöhen.

Ist die komplette Stromlosschaltung aller Fahrzeugsysteme des Kraftfahrzeugs ein Ziel des erfindungsgemäßen Verfahrens, so kann auch vorgesehen sein, dass ein den Ablauf einer vorbestimmten Zeitdauer nach der Kollision beschreibendes Kriterium für alle Fahrzeugsysteme angewandt wird. Das bedeutet, bei Erfüllung dieses Kriteriums werden alle Fahrzeugsysteme grundsätzlich stromlos geschaltet, so dass nach Ablauf der vorbestimmten Zeitdauer sichergestellt ist, dass keine Gefahren durch verbliebene Stromflüsse mehr existieren. Beispielsweise kann als eine solche Zeitdauer zwei bis sechs Minuten, insbesondere fünf Minuten, gewählt werden.

Wie bereits erwähnt wurde, sind Diagnosevorgänge für Fahrzeugsysteme im Stand der Technik bereits bekannt, beispielsweise eingebaute Diagnosefunktionen, die einen Status eines Fahrzeugsystems melden, aber auch von anderen Steuergeräten durchgeführte Diagnoseaktionen, die den Status eines Fahrzeugsystems als Ergebnis erhalten. Auch diese können erfindungsgemäß vorteilhaft genutzt werden, um die Stromlosschaltung von Fahrzeugsystemen zu steuern, indem zweckmäßigerweise vorgesehen sein kann, dass ein Diagnosevorgang wenigstens eines Teils der Fahrzeugsysteme durchgeführt wird, wobei bei Nichtverfügbarkeit des Fahrzeugsystems als Ergebnis der Diagnose das Fahrzeugsystem stromlos geschaltet wird. Mithin kann festgestellt werden, ob ein Fahrzeugsystem überhaupt noch oder in hinreichendem Maße verfügbar ist, wobei dann, wenn die Funktionsfähigkeit des Fahrzeugsystems nicht mehr ausreicht, um zur weiteren Sicherung des Kraftfahrzeugs beizutragen, eine Stromlosschaltung erfolgen kann. Dies erfolgt idealerweise in einer Art ständiger, beispielsweise zyklischer Überwachung, deren Ergebnisse selbstverständlich auch für die Beurteilung der dritten Klasse von Fahrzeugsystemen, wie oben beschrieben, genutzt werden können.

In weiterer vorteilhafter Ausgestaltung der vorliegenden Erfindung kann vorgesehen sein, dass wenigstens ein Kriterium eine Priorisierung umfasst, wobei höher priorisierte Fahrzeugsysteme abhängig von dem verfügbaren Strom später stromlos geschaltet werden als niedriger priorisierte Fahrzeugsysteme. Beispielsweise kann es nach einer Kollision auch vorkommen, dass, beispielsweise aufgrund von Fehlfunktionen, nicht mehr die volle Leistung der elektrischen Energiequelle, insbesondere wenigstens einer Batterie, zur Verfügung steht, so dass in diesem Fall mit besonderem Vorteil eine Priorisierung vorgenommen werden kann, die widerspiegeln kann, wie stark einzelne Fahrzeugsysteme zur Gesamtsicherheit des Kraftfahrzeugs beitragen. Auf diese wird dann intelligent aufgrund der Priorisierung der noch verbliebende Strom verteilt, so dass auch bei einer diesbezüglichen Einschränkung ein geeignetes Energiemanagement gegeben sein kann.

Es kann ferner vorgesehen sein, dass ein wenigstens eine Aktion wenigstens eines Fahrzeugsystems realisierender idealer Aktionsplan zur Erhöhung der Sicherheit ermittelt wird und abhängig von den Ergebnissen einer Diagnose wenigstens eines von dem Aktionsplan betroffenen Fahrzeugsystems ein realisierbarer Aktionsplan mit wenigstens einer verbliebenen Aktion wenigstens eines Fahrzeugsystems ermittelt wird, wobei als Kriterium das Vorhandensein einer einem betrachteten Fahrzeugsystem zugeordneten Aktion in dem realisierbaren Aktionsplan verwendet wird. Beispielsweise ist es also möglich, einen Aktionsplan vorzusehen, der von der Verfügbarkeit aller benötigten Fahrzeugsysteme ausgeht. Wurde nun jedoch analysiert, dass einige Fahrzeugsysteme nicht oder nicht mehr vollständig funktionsfähig sind, kann mithin eine Anpassung erfolgen, das bedeutet, es kann beurteilt werden, inwieweit der Aktionsplan, insbesondere welche Aktionen, überhaupt noch durchführbar sind. Die durchführbaren Aktionen verbleiben somit im Aktionsplan, so dass ein realisierbarer Aktionsplan entsteht. Ist nun ein Fahrzeugsystem zu beurteilen, welches einer noch durchzuführenden Aktion in dem realisierbaren Aktionsplan zugeordnet ist, erhält dieses weiterhin elektrische Energie, während bei Nichterfüllung dieses Kriteriums das Fahrzeugsystem stromlos geschaltet werden kann (falls nicht ein anderes Kriterium verlangt, dass weiterhin eine elektrische Energiezufuhr bestehen bleibt). Die Beurteilung und Durchführung dieses Aktionsplans, insbesondere also die Ansteuerung von Fahrzeugsystemen zur Durchführung von Aktionen, kann zweckmäßigerweise im selben Steuergerät wie das allgemeine Energiemanagement der vorliegenden Erfindung erfolgen, jedoch ist es auch denkbar, hierfür ein spezielles, mit dem für das Energiemanagement zuständigen Steuergerät kommunizierendes Steuergerät vorzusehen. Insgesamt wird in dieser Variante der Erfindung mithin überprüft, was noch möglich ist und abhängig davon eine Versorgung von Fahrzeugsystemen vorgenommen.

In einer weiteren zweckmäßigen Ausgestaltung der vorliegenden Erfindung kann vorgesehen sein, dass bei einer Nichtverfügbar des die Kriterien auswertenden Fahrzeugsystems das Kraftfahrzeug insgesamt stromlos geschaltet wird. Als eine Art Rückfallebene bei Ausfall des erfindungsgemäßen Energiemanagements kann also vorgesehen sein, dass insbesondere dann, wenn das die Kriterien auswertende Steuergerät selbst von einem Ausfall betroffen ist, das Kraftfahrzeug sicherheitshalber über einen zentralen Schalter komplett stromlos geschaltet wird, so dass dann alle Fahrzeugsysteme von der Stromversorgung getrennt werden. So ist insgesamt eine weiter erhöhte Sicherheit gegeben.

Vorteilhaft ist es ferner, wenn bei wenigstens einem nicht stromlos geschalteten Fahrzeugsystem ein an Rettungskräfte gerichtetes Warnsignal ausgegeben wird. Fließen mithin noch Ströme im erfindungsgemäßen Kraftfahrzeug in einem an die Kollision anschließenden Zeitraum, so kann vorgesehen sein, ein Warnsignal auszugeben, das Rettungskräfte darauf hinweist, dass noch keine vollständige Stromfreischaltung des Kraftfahrzeugs gegeben ist. Während hierfür dedizierte Warneinrichtungen, beispielsweise spezielle Warnlampen, vorgesehen sein können, ist auch ein spezieller Betrieb bestimmter Fahrzeugleuchten möglich, da allein der Betrieb eines Leuchtmittels die Rettungskräfte darauf hinweist, dass noch elektrische Aktivität in dem Kraftfahrzeug vorherrscht. Jedoch sind auch akustische Warnsignale und dergleichen denkbar. Selbstverständlich wird das das Warnsignal ausgebende Fahrzeugsystem dann ebenso weiterhin mit Strom versorgt.

Gerade in diesem Zusammenhang kann es auch nützlich sein, wenn bei einem zum Durchführen des erfindungsgemäßen Verfahrens ausgebildeten Kraftfahrzeug selbst dann, wenn es sich um ein allein mit einem Kraftstoff verwendenden Motor betriebenes Kraftfahrzeug handelt, ein für die Rettungskräfte zugänglicher Zentralschalter zur Stromlosschaltung des Kraftfahrzeugs vorgesehen ist. Ein derartiger Schalter ist für Hybrid- und Elektrofahrzeuge bereits unter dem Namen "Service Disconnect" im Stand der Technik bekannt geworden. Darin geht es insbesondere um den Schutz der Rettungskräfte vor von einer Hochspannungsbatterie ausgehenden Bedrohungen.

Ein derartiger "Service-Disconnect" kann jedoch auch bei Kraftfahrzeugen ohne eine Hochspannungsbatterie sinnvoll sein, nachdem durchaus Effekte, insbesondere Kurzschlüsse und dergleichen, auftreten können, die zum Aufbau elektrischer Probleme beitragen können.

Neben dem Verfahren betrifft die vorliegende Erfindung auch ein Kraftfahrzeug, umfassend wenigstens ein zur Durchführung des erfindungsgemäßen Verfahrens ausgebildetes Steuergerät. Sämtliche Ausführungen bezüglich des erfindungsgemäßen Verfahrens lassen sich analog auf das erfindungsgemäße Kraftfahrzeug übertragen, welches mithin dieselben Vorteile liefert. Insbesondere umfasst das Kraftfahrzeug wenigstens ein Bordnetz, welches von wenigstens einer elektrischen Energiequelle, insbesondere wenigstens einer Batterie, gespeist wird. Das Bordnetz versorgt eine Mehrzahl von Fahrzeugsystemen des Kraftfahrzeugs. Über eine entsprechende Schalteinrichtung lässt sich die Stromzufuhr zu bestimmten Fahrzeugsystemen, gegebenenfalls wenigstens teilweise auch als Gruppen von Fahrzeugsystemen, steuern. Diese Schalteinrichtung wird dann von dem das erfindungsgemäße Verfahren ansteuernden Steuergerät angesteuert, um stufenweise anhand der Kriterien die Fahrzeugsysteme stromlos schalten zu können.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: eine Prinzipskizze eines erfindungsgemäßen Kraftfahrzeugs, und
- Fig. 2: eine Prinzipskizze zum Ablauf des erfindungsgemäßen Verfahrens.

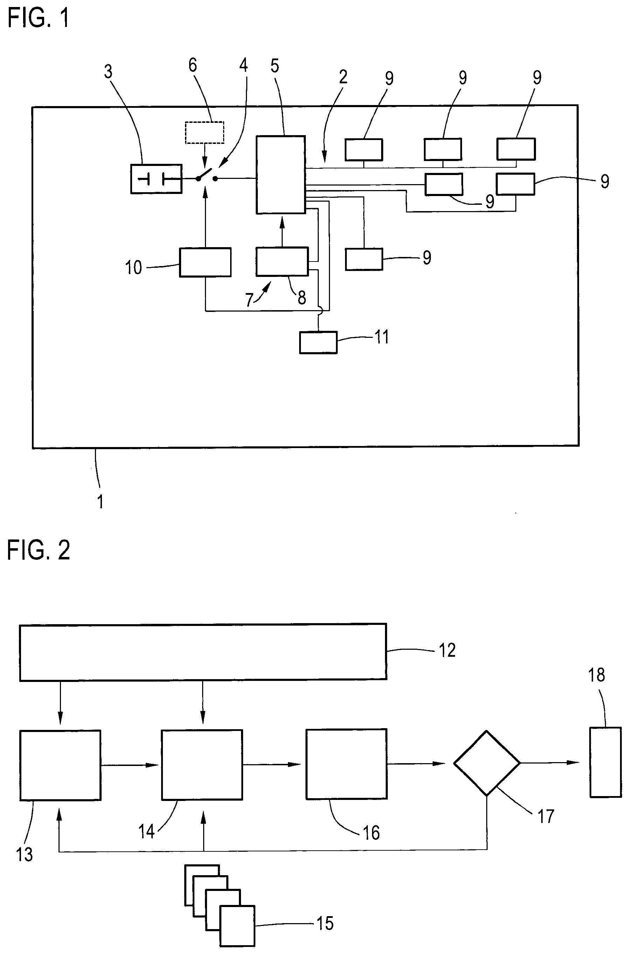

Fig. 1 zeigt eine Prinzipskizze eines erfindungsgemäßen Kraftfahrzeugs 1. Das Kraftfahrzeug 1 weist, wie grundsätzlich bekannt, ein Bordnetz 2 zur Stromversorgung verschiedener Fahrzeugsysteme des Kraftfahrzeugs 1 auf. Das Bordnetz 2 wird gespeist von einer elektrischen Energiequelle, hier einer Batterie 3. Ein Hauptschalter 4 und eine Schaltvorrichtung 5 bestimmen, welches Fahrzeugsystem gerade mit Strom versorgt wird, wobei bezüglich des Hauptschalters 4 eine Service-Disconnect-Vorrichtung 6 eine vollständige Trennung der Batterie 3 vom Bordnetz 2 ermöglichen kann. Als ein Fahrzeugsystem ist ein Batteriemanagementsystem 7 mit einem Steuergerät 8 vorhanden, welches zur Durchführung des erfindungsgemäßen Verfahrens ausgebildet ist, mit dem sich die folgende Beschreibung näher auseinandersetzen soll.

Das erfindungsgemäße Verfahren betrifft den Betrieb des Kraftfahrzeugs 1, insbesondere im Hinblick auf die elektrische Energieversorgung, in einem Zeitraum unmittelbar nach einer Kollision. Anhand verschiedener Kriterien, worauf im Folgenden noch näher eingegangen werden wird, steuert das Steuergerät 8 die Schaltvorrichtung an, um alle weiteren Fahrzeugsysteme 9, von denen einige nur beispielhaft dargestellt sind, weiterhin mit Strom zu versorgen oder stromlos zu schalten, falls diese nichts zur weiteren Sicherheit des Kraftfahrzeugs 1, insbesondere im Hinblick auf Folgekollisionen, beitragen können.

Dabei wird die Funktionsfähigkeit des Steuergeräts 8 selbst noch überwacht, vorliegend von einem Steuergerät 10, wobei bei Nichtverfügbarkeit des Steuergeräts 8 der Hauptschalter 4 unmittelbar angesteuert wird und das Kraftfahrzeug 1 komplett stromlos geschaltet wird, das bedeutet, die Batterie 3 wird von dem Bordnetz 2 getrennt, so dass keines der Fahrzeugsysteme 7, 9 und auch das Steuergerät 10 weiter mit elektrischer Energie versorgt werden.

Dem Steuergerät 8 ist ferner auch ein Warnmittel 11 zugeordnet, über welches nach einer Kollision eine Warnung ausgegeben werden kann, solange das Bordnetz 2 nicht komplett stromlos geschaltet ist. Diese warnt Rettungskräfte, dass noch ein Stromfluss vorhanden sein kann. Diese können dann beispielsweise, wenn sie das Kraftfahrzeug diesbezüglich sichern wollen, die Service-Disconnect-Vorrichtung 6 verwenden, um eine komplette Stromlosschaltung zu erreichen.

An dieser Stelle ist noch anzumerken, dass das erfindungsgemäße Verfahren zum Energiemanagement nach einer Kollision nicht unbedingt bei jeder Kollision durchgeführt werden muss, sondern dass eine bestimmte Bedingung vorgesehen sein kann, beispielsweise die Überschreitung eines Grenzwerts durch einen Kollisionsschwerewert. So wird vermieden, dass bei leichteren, die Sicherheit des Kraftfahrzeugs weniger gefährdenden Kollisionen eine Abschaltung von vom Fahrer noch benötigten Fahrzeugsystemen 9 und letztlich gar eine komplette Stromlosschaltung erfolgt, insbesondere in Fällen, in denen damit zu rechnen ist, dass das Kraftfahrzeug und der Fahrer noch einsatzfähig sein könnten und die Führung des Kraftfahrzeugs weiterhin übernehmen könnten.

Fig. 2 ist eine Prinzipskizze, die den Ablauf des erfindungsgemäßen Verfahrens zum Betrieb des Kraftfahrzeugs 1 genauer erläutert. Dabei zeigt zunächst der Kasten 12 schematisch ständig ablaufende Diagnose- und Funktionsüberwachungsvorgänge innerhalb des Kraftfahrzeugs 1, insbesondere ausgehend von den Steuergeräten 8 und 10 (letzteres bezüglich des Steuergeräts 8) an. Viele Fahrzeugsysteme, zu denen neben Sensoren, Aktoren und Steuergeräten auch sämtliche anderen vorstellbaren, elektrische Energie benötigenden Vorrichtungen gehören, weisen bereits interne Diagnosefunktionen auf, so dass sie ihre grundsätzliche Funktionsfähigkeit beispielsweise über ein in Fig. 1 nicht näher dargestelltes Bussystem, insbesondere auch auf Anfrage, mitteilen können. Jedoch sind auch externe Diagnosevorgänge, die insbesondere im Steuergerät 8 durchgeführt werden, denkbar, beispielsweise indem Antworten anderer Fahrzeugsysteme über das Bussystem angefragt werden bzw. Plausibilitätsüberprüfungen von anderen Fahrzeugsystemen gelieferten Daten vorgenommen werden. Eine Vielzahl grundsätzlich bekannter Möglichkeiten sind mithin denkbar, um die grundsätzliche Funktionsfähigkeit und/oder den Funktionsumfang einzelner Fahrzeugsysteme beschreibende Informationen zu erhalten.

In einem Schritt 13 wird nun zunächst überprüft, ob das Steuergerät 8 des Energiemanagement-Systems 7 zur Verfügung steht und funktionsfähig im Hinblick auf das erfindungsgemäße Verfahren ist. Ist dies nicht der Fall, so erfolgt, wie bereits beschrieben wurde, eine Trennung des Bordnetz 2 über den Hauptschalter 4 von der Batterie 3.

Ansonsten werden in einem Schritt 14 mittels des Steuergeräts 8 für jedes der Fahrzeugsysteme 9 Kriterien 15 überprüft, die bestimmen, ob das Fahrzeugsystem 9 stromlos geschaltet wird.

Dabei ist im Rahmen eines ersten Kriteriums 15 vorgesehen, dass die sämtlichen weiteren Fahrzeugsysteme 9, die alle Fahrzeugsysteme, die elektrische Energie benötigen, umfassen, in drei Gruppen aufgeteilt sind. Eine erste Gruppe von Fahrzeugsystemen 9 umfasst die Fahrzeugsysteme, die unmittelbar nach der Kollision, hier unmittelbar nach Abschluss der Kollision, stromlos zu schalten sind. Dabei handelt es sich um Fahrzeugsysteme, die keinen Beitrag zu die Sicherheit des Kraftfahrzeugs 1, insbesondere im Hinblick auf Folgekollisionen, erhöhenden Sicherungsaktionen liefern können, bzw. eher noch für eine weitere Gefährdung sorgen könnten. Die erste Gruppe kann die Kraftstoffpumpe und/oder Komfortelektronik und/oder eine Heckscheibenheizung und/oder Komponenten einer Klimaanlage umfassen. Insbesondere Komponenten, die allein dem Komfort eines Fahrers zugeordnet sind, beispielsweise ein CD-Wechsler und dergleichen, können mithin zur sofortigen Stromlosschaltung vorgesehen sein. Diese Fahrzeugsysteme 9 der ersten Gruppe können im Übrigen auch, wie im oberen Teil der Fig.1 angedeutet, an eine einzige Versorgungsleitung angeschlossen sein, so dass sie letztlich durch einen einzigen Schaltvorgang deaktiviert werden können.

Eine zweite Gruppe von Fahrzeugsystemen 9 umfasst solche, die erst nach Durchführung einer Sicherungsaktion stromlos zu schalten sind. Wird festgestellt, beispielsweise über einen Status dieser Fahrzeugsysteme 9, dass die Sicherungsaktion, die diese ohne Eingabe weiterer Fahrzeugsysteme 9 durchführen können, durchgeführt wurde, können auch diese Fahrzeugsysteme 9 der zweiten Gruppe stromlos geschalten werden. Insbesondere kann über die zweite Gruppe eine Art Pre-Crash-Vorbereitung durchgeführt oder abgeschlossen werden. Damit ist insbesondere ein bestimmter Satz von Sicherungsaktionen gemeint, beispielsweise das Anstellen der Motorhaube, das Schließen von Fenstern, das Einnehmen einer bestimmten Sitzposition, das Stellen des Fahrwerks auf eine andere Fahrwerkhöhe und dergleichen. Bezüglich der zweiten Gruppe wird mithin deren Stromlosschaltung daran beurteilt, ob die Sicherungsaktion bereits durchgeführt wurde. Ist dies der Fall und sind von dem Fahrzeugsystem 9 der zweiten Gruppe keine weiteren Sicherungsaktionen mehr notwendig und/oder denkbar, können auch diese stromlos geschaltet werden. In diese zweite Klasse von Fahrzeugsystemen 9 fallen auch solche, die indirekt zur Sicherheit beitragende Aktionen liefern, beispielsweise eine Entriegelung des Kofferraums sicherstellen oder einen Notruf absetzen (emergeny call system).

Als dritte Gruppe von Fahrzeugsystemen 9 existieren solche, die zwar grundsätzlich in der Lage sind, die Sicherheit der Insassen des Kraftfahrzeugs erhöhende Maßnahmen bzw. Sicherungsaktionen durchzuführen, jedoch dabei von anderen Fahrzeugsystemen und/oder bestimmten vorliegenden Daten abhängig sind. Wie bereits erwähnt, wird, vgl. Kasten 12, ständig überwacht, ob bestimmte Fahrzeugsysteme 9, insbesondere jene, die nicht ohnehin schon stromlos geschaltet wurden, noch verfügbar sind und ihre vorläufige Funktionsfähigkeit bieten können. Beispielsweise benötigt ein mehrstufig auslösender Airbag, dessen zweite Stufe noch nicht gezündet ist, eine Information von Kollisionssensoren bzw. Aufprallsensoren, um auszulösen. Stehen die entsprechenden Sensoren nicht mehr zur Verfügung, ist es auch nicht sinnvoll, das Airbagsystem weiterzubetreiben. Ähnlich existieren auch komplexere Fälle von Fahrzeugsystemen 9 der dritten Gruppe, beispielsweise Sicherheitssysteme, deren Ziel es ist, das Kraftfahrzeug 1 möglichst in eine im Hinblick auf Zweitkollisionen möglichst sichere Position abzustellen. Hierzu müssen nicht nur Daten über das Kraftfahrzeug 1 selber (Egodaten) und Umfelddaten berücksichtigt werden, sondern es muss auch möglich sein, tatsächliche Aktorik des Kraftfahrzeugs insbesondere eine Lenkung und/oder einen Motor und/oder ein Bremssystem, sinnvoll anzusteuern, um Maßnahmen vornehmen zu können. Hieraus ergibt sich ein Abhängigkeitsgeflecht, das durch entsprechende Verfügbarkeitskriterien 15 abgebildet werden kann. Dabei ist bei Fahrzeugsystemen 9 selbstverständlich auch zu beurteilen, ob diese von anderen Fahrzeugsystemen 9 benötigt werden und dergleichen. Ein solches Kriterium 9 ist also letztlich als ein Regelsatz zu verstehen, der Verfügbarkeitsinformationen über weitere Fahrzeugsysteme 9 bezüglich eines Fahrzeugsystems 9 auswertet und daran entscheidet, ob das Fahrzeugsystem 9 stromlos geschaltet werden kann.

Dabei sei an dieser Stelle noch angemerkt, dass dabei selbstverständlich berücksichtigt werden kann, dass der Ausfall von Datenquellen, insbesondere Sensoren, zumindest teilweise aufgrund vorhandener, bereits vor und/oder während der Kollision aufgenommener Daten wenigstens teilweise kompensiert werden kann. Betrachtet man beispielsweise ein Umfeldmodell, so ist davon auszugehen, dass zumindest bezüglich statischer Objekte die im Umfeldmodell eingetragenen Informationen auch weiterhin gültig sind, während Informationen bezüglich beweglicher Objekte beispielsweise für einen aktuellen Zeitpunkt prädiziert werden können. Es ist also im Rahmen der vorliegenden Erfindung durchaus angedacht, vor der Kollision oder auch noch während der Kollision aufgenommene Daten weiterzuverwerten und daraus aktuell gültige Daten abzuleiten, denen gegebenenfalls eine gewisse Verlässlichkeit zugeordnet sein kann, um ausgefallene Datenquellen zu ersetzen, was ebenso im Hinblick auf die Verfügbarkeitskriterien berücksichtigt werden kann.

Nichtsdestotrotz werden zusätzlich zu dem Verfügbarkeitskriterium bezüglich der Fahrzeugsysteme der dritten Gruppe auch weitere Kriterien 15 betrachtet, die eine dennoch sinnvolle Stromlosschaltung dieser Fahrzeugsysteme der dritten Gruppe betreffen. Beispielsweise kann auch bezüglich der Fahrzeugsysteme 9 der dritten Gruppe überprüft werden, ob eine bestimmte Sicherungsaktion bereits durchgeführt wurde, beispielsweise bei einem mehrstufigen Airbagsystem, ob alle Stufen des mehrstufigen Airbagsystems bereits ausgelöst haben, so dass das Airbagsystem ausgeschaltet werden kann. Zusätzlich oder alternativ kann auch analysiert werden, ob es überhaupt noch sinnvolle Sicherungsaktionen geben kann, die das Fahrzeugsystem 9 durchführen könnte. Geht es beispielsweise darum, das Kraftfahrzeug 1 möglichst sicher abzustellen, kann überprüft werden, ob diese sichere Abstellposition und -orientierung bereits erreicht ist, woraufhin von den entsprechenden Fahrzeugsystemen 9 der dritten Gruppe keine weiteren Aktionen mehr sinnvoll denkbar sind, mithin ebenso eine Stromlosschaltung erfolgen kann. Auch der Ablauf einer vorbestimmten Zeitdauer kann als weiteres Kriterium berücksichtigt werden.

Zusätzlich zu diesen gruppenbezogenen Kriterien werden in diesem Ausführungsbeispiel des erfindungsgemäßen Verfahrens noch einig weitere Kriterien betrachtet. Zunächst ist ein Kriterium vorgesehen, das den Ablauf einer vorbestimmten, global für alle Fahrzeugsysteme 9 gedachten Zeitdauer nach der Kollision überwacht. Ist diese vorbestimmte, globale Zeitdauer abgelaufen, werden grundsätzlich alle Fahrzeugsysteme 9 ausgeschaltet, so dass nach der durch die Zeitdauer definierten Zeitspanne sichergestellt ist, dass das Kraftfahrzeug 1 stromlos ist, was ein letztendliches Ziel des erfindungsgemäßen Verfahrens ist. Beispielsweise können hier fünf Minuten angesetzt werden.

Ferner werden die, vgl. Kasten 12, gewonnenen Informationen über die Verfügbarkeit der Fahrzeugsysteme 9 auch bezüglich eines gerade betrachteten Fahrzeugsystems 9 selbst in Betracht gezogen. Wird nämlich festgestellt, dass ein Fahrzeugsystem 9 gar nicht in der Lage ist, zu einer Sicherungsaktion, die die Sicherheit des Kraftfahrzeugs 1 erhöht, beizutragen, ist es also beispielsweise vollständig ausgefallen, ist auch keine Stromzufuhr mehr sinnvoll oder notwendig, so dass es stromlos geschaltet werden kann.

Schließlich ist auch eine Priorisierung für den Fall vorgesehen, dass die noch zur Verfügung stehende elektrische Energie nicht für alle Fahrzeugsysteme 9 ausreicht. Dann können über den Fahrzeugsystemen 9 zugeordnete Prioritäten mithin zuerst Fahrzeugsysteme 9 niedrigerer Priorität ausgeschaltet werden, auch wenn sie eigentlich noch weiterbetrieben werden sollten. So ist auch bezüglich der noch verfügbaren Energie ein sinnvolles Energiemanagement nach einer Kollision denkbar.

Eine weitere denkbare Vorgehensweise im Rahmen der vorliegenden Erfindung ist es im Übrigen, mit Aktionsplänen zu arbeiten. So ist beispielsweise eine Ausgestaltung denkbar, in der ein idealer Aktionsplan, der Sicherungsaktionen enthält, die bei angenommener Funktionsfähigkeit aller Fahrzeugsysteme 9 sinnvoll und möglich wären. Nachdem ja, Kasten 12, ständig die Verfügbarkeit von Fahrzeugsystemen 9 überwacht wird, kann ermittelt werden, welche von diesen Aktionen des Aktionsplans sich überhaupt durchführen lassen, so dass ein realisierbarer Aktionsplan mit den verbliebenen Sicherungsaktionen besteht, der als Grundlage für ein Kriterium 15 herangezogen wird, so dass nur Fahrzeugsysteme 9, die an einer im realisierbaren Aktionsplan enthaltenen Sicherungsaktion teilnehmen, Strom erhalten können. Dabei sei an dieser Stelle angemerkt, dass das Steuergerät 8 auch genutzt werden kann, um zentral die Ansteuerung der Fahrzeugsysteme 9 zur Durchführung der die Sicherheit des Kraftfahrzeugs 1 erhöhenden Maßnahmen und Sicherungsaktionen zu übernehmen.

In einem Schritt 16 wird dann die Schaltvorrichtung 5 so angesteuert, dass nur die tatsächlich noch zu versorgenden Fahrzeugsysteme 9 mit Strom versorgt werden.

In einem Schritt 17 wird überprüft, ob schon alle Fahrzeugsysteme 9 deaktiviert sind, mithin stromlos geschaltet sind. Ist dies der Fall, wird das Verfahren in einem Schritt 18 beendet, insbesondere, indem auch die Steuergeräte 8 und 10, mithin das Energiemanagementsystem 7 selbst, von der Batterie 3 getrennt werden.

Sind noch nicht alle Fahrzeugsysteme 9 deaktiviert, werden die Schritte, insbesondere zyklisch, wiederholt.

Solange noch irgendein Stromfluss in dem Kraftfahrzeug 1 vorliegt, wird auf jeden Fall auch das Warnmittel 11 zur Ausgabe des Warnsignals betrieben.

## Patentansprüche

1. Verfahren zum Betrieb eines Kraftfahrzeugs (1), insbesondere der Energieversorgung eines Kraftfahrzeugs (1), während und/oder im Zeitraum nach einer Kollision, wobei eine wenigstens teilweise Stromlosschaltung des Kraftfahrzeugs (1) erfolgt und die Stromversorgung eines Fahrzeugsystems (9) während und/oder nach der Kollision jeweils anhand wenigstens eines Kriteriums (15) ermittelt und geschaltet wird, wobei im Rahmen eines Kriteriums (15) die Fahrzeugsysteme (9) in wenigstens zwei Klassen von Fahrzeugsystemen (9) eingeteilt sind, wobei die Stromversorgung wenigstens teilweise in Abhängigkeit der Klassenzugehörigkeit des Fahrzeugsystems (9) ermittelt wird,
**dadurch gekennzeichnet,**
**dass** eine dritte Klasse von von anderen Fahrzeugsystemen (9) und/oder vorliegenden Daten abhängigen Fahrzeugsystemen (9) bei Erfüllung eines die Nichtverfügbarkeit einer oder mehrerer vordefinierter anderer Fahrzeugsysteme (9) und/oder Daten anzeigenden Verfügbarkeitskriteriums (15) stromlos geschaltet werden.

2. Verfahren nach Anspruch 1,
**dadurch gekennzeichnet,**
**dass** wenigstens eine erste Klasse von während und/oder nach der Kollision, insbesondere zu Beginn und/oder nach Abschluss der Kollision, unmittelbar stromlos zu schaltender Fahrzeugsysteme (9) verwendet wird.

3. Verfahren nach Anspruch 1 oder 2,
**dadurch gekennzeichnet,**
**dass** eine zweite Klasse von unabhängig erst nach Durchführung einer Sicherungsaktion stromlos zu schaltenden Fahrzeugsystemen (9) verwendet wird, wobei die Fahrzeugsysteme (9) der zweiten Klasse nach Durchführung der Sicherungsaktion stromlos geschaltet werden.

4. Verfahren nach Anspruch 3,
**dadurch gekennzeichnet,**
**dass** durch die Sicherungsaktionen das Kraftfahrzeug (1) in wenigstens einen vordefinierten Sicherheitszustand verbracht wird.

5. Verfahren nach einem der vorangehenden Ansprüche,
**dadurch gekennzeichnet,**
**dass** ein nicht durch das Verfügbarkeitskriterium (15) stromlos geschaltetes Fahrzeugsystem (9) bei Erfüllung wenigstens eines weiteren, die Durchführung einer Sicherungsaktion und/oder die Nichtverfügbarkeit die Sicherheit des Kraftfahrzeugs (1) erhöhender Sicherungsaktionen und/oder den Ablauf einer bestimmten Zeitdauer beschreibenden Kriteriums (15) stromlos geschaltet werden.

6. Verfahren nach einem der vorangehenden Ansprüche,
**dadurch gekennzeichnet,**
**dass** als Daten vor der Kollision ermittelte Umfelddaten eines Umfeldmodells betrachtet werden.

7. Verfahren nach einem der vorangehenden Ansprüche,
**dadurch gekennzeichnet,**
**dass** ein den Ablauf einer vorbestimmten Zeitdauer nach der Kollision beschreibendes Kriterium (15) für alle Fahrzeugsysteme (9) angewandt wird.

8. Verfahren nach einem der vorangehenden Ansprüche,
**dadurch gekennzeichnet,**
**dass** ein Diagnosevorgang wenigstens eines Teils der Fahrzeugsysteme (9) durchgeführt wird, wobei bei Nichtverfügbarkeit des Fahrzeugsystems (9) als Ergebnis der Diagnose das Fahrzeugsystem (9) stromlos geschaltet wird.

9. Verfahren nach einem der vorangehenden Ansprüche,
**dadurch gekennzeichnet,**
**dass** wenigstens ein Kriterium (15) eine Priorisierung umfasst, wobei höher priorisierte Fahrzeugsysteme (9) abhängig von dem verfügbaren Strom später stromlos geschaltet werden als niedriger priorisierte Fahrzeugsysteme (9).

10. Verfahren nach einem der vorangehenden Ansprüche,
**dadurch gekennzeichnet,**
**dass** ein wenigstens eine Aktion wenigstens eines Fahrzeugsystems (9) realisierender idealer Aktionsplan zur Erhöhung der Sicherheit ermittelt wird und abhängig von den Ergebnissen einer Diagnose wenigstens eines von dem Aktionsplan betroffenen Fahrzeugsystems (9) ein realisierbarer Aktionsplan mit wenigstens einer verbliebenen Aktion wenigstens eines Fahrzeugsystems (9) ermittelt wird, wobei als Kriterium das Vorhandensein einer einem betrachteten Fahrzeugsystem (9) zugeordneten Aktion in dem realisierbaren Aktionsplan verwendet wird.

11. Verfahren nach einem der vorangehenden Ansprüche,
**dadurch gekennzeichnet,**
**dass** bei einer Nichtverfügbarkeit des die Kriterien auswertenden Fahrzeugsystems (7) das Kraftfahrzeug (1) insgesamt stromlos geschaltet wird.

12. Verfahren nach einem der vorangehenden Ansprüche,
**dadurch gekennzeichnet,**
**dass** bei wenigstens einem nicht stromlos geschalteten Fahrzeugsystem (9) ein an Rettungskräfte gerichtetes Warnsignal ausgegeben wird.

13. Kraftfahrzeug (1), umfassend wenigstens ein zur Durchführung eines Verfahrens nach einem der vorangehenden Ansprüche ausgebildetes Steuergerät (8, 10).

## Claims

1. Method of operating a motor vehicle (1), in particular for supplying power to a motor vehicle (1) during and/or in the period after a collision, wherein the motor vehicle (1) is at least partially de-energised and the supply of power to a vehicle system (9) is determined and switched during and/or after the collision on the basis of at least one respective criterion (15), wherein in the context of one criterion (15) the motor vehicle systems (9) are divided into at least two classes of vehicle systems (9), wherein the supply of power is determined at least partially as a function of the class to which the vehicle system (9) belongs, **characterised in that** a third class of vehicle systems (9) which is dependent upon other vehicle systems (9) and/or available data is de-energised when an availability criterion (15) is present which indicates that one or more predefined other vehicle systems (9) and/or data are not available.

2. Method according to claim 1, **characterised in that** at least one first class of vehicle systems (9) is used which is to be de-energised directly during and/or after the collision, in particular at the beginning and/or after the conclusion of the collision.

3. Method according to claim 1 or 2, **characterised in that** a second class of vehicle systems (9) is used, which systems are to be independently de-energised only after a safety action has been carried out, wherein the vehicle systems (9) of the second class are de-energised after the safety action has been carried out.

4. Method according to claim 3, **characterised in that** the motor vehicle (1) is brought into at least one predefined safety state by the safety actions.

5. Method according to one of the preceding claims, **characterised in that** a vehicle system (9) which is not de-energised by the availability criterion (15) is deenergised when at least one further criterion (15) is met which describes the carrying out of a safety action and/or the non-availability of safety actions enhancing the safety of the motor vehicle (1) and/or the expiration of a specific period of time.

6. Method according to one of the preceding claims, **characterised in that** the data comprise environmental data of a model environment determined before the collision.

7. Method according to one of the preceding claims, **characterised in that** a criterion (15) which describes the expiration of a predetermined period of time after the collision is applied to all vehicle systems (9).

8. Method according to one of the preceding claims, **characterised in that** a diagnostic process of at least a part of the vehicle systems (9) is carried out, and the vehicle system (9) is de-energised as a result of the diagnostic process when the vehicle system (9) is not available.

9. Method according to one of the preceding claims, **characterised in that** at least one criterion (15) comprises a prioritisation, wherein, depending upon the available supply of power, vehicle systems (9) having a higher priority are de-energised later than vehicle systems (9) having a lower priority.

10. Method according to one of the preceding claims,
**characterised in that** at least one ideal action plan which realises an action of at least one vehicle system (9) for enhancing safety and, depending upon the results of a diagnosis of at least one vehicle system (9) affected by the action plan, a realisable action plan with at least one remaining action of at least one vehicle system (9) is determined, wherein the presence of an action associated with a considered vehicle system (9) in the realisable action plan is used as the criterion.

11. Method according to one of the preceding claims,
**characterised in that** the motor vehicle (1) in its entirety is de-energised when a vehicle system (7) which evaluates the at least one criterion is not available.

12. Method according to one of the preceding claims,
**characterised in that** a warning signal directed to rescue teams when at least one vehicle system (9) is not de-energised.

13. Vehicle (1), comprising at least one control device (8,
10) configured to carry out a method according to the preceding claims.

## Revendications

1. Procédé de fonctionnement d'un véhicule automobile (1), en particulier pour l'alimentation en énergie d'un véhicule automobile (1), pendant et/ou dans l'intervalle suivant une collision, dans lequel il se produit une coupure de courant au moins en partie dans le véhicule automobile (1) et l'alimentation en courant d'un système véhiculaire (9) est déterminée et connectée pendant et/ou après la collision respectivement sur la base d'au moins un critère (15), dans lequel, dans le cadre d'un critère (15), les systèmes véhiculaires (9) sont divisés en au moins deux classes de systèmes véhiculaires (9), dans lequel l'alimentation en courant est déterminée au moins en partie en fonction de l'appartenance à une classe du système véhiculaire (9),
**caractérisé en ce que** :
l'on coupe une troisième classe de systèmes véhiculaires (9) dépendant d'autres systèmes véhiculaires (9) et/ou de données présentes lorsqu'est satisfait un critère de disponibilité (15) affichant l'indisponibilité d'un ou plusieurs autres systèmes véhiculaires (9) prédéfinis et/ou de données.

2. Procédé selon la revendication 1,
**caractérisé en ce que** :
l'on utilise au moins une première classe de systèmes véhiculaires (9) à couper directement pendant et/ou après la collision, en particulier au début et/ou à la fin de la collision.

3. Procédé selon la revendication 1 ou la
revendication 2,
**caractérisé en ce que** :
l'on utilise une deuxième classe de systèmes
véhiculaires (9) à couper indépendamment seulement après réalisation d'une action de sécurité, dans lequel les systèmes véhiculaires (9) de la deuxième classe sont coupés après réalisation de l'action de sécurité.

4. Procédé selon la revendication 3,
**caractérisé en ce que** :
le véhicule automobile (1) est amené dans au moins un état de sécurité prédéfini par les actions de sécurité.

5. Procédé selon l'une quelconque des revendications précédentes,
**caractérisé en ce que** :
un système véhiculaire (9) non coupé par le critère de disponibilité (15) est coupé lorsqu'est satisfait au moins un autre critère (15) décrivant des actions de sécurité augmentant la réalisation d'une action de sécurité et/ou l'indisponibilité de la sécurité du véhicule automobile (1) et/ou l'expiration d'une période de temps déterminée.

6. Procédé selon l'une quelconque des revendications précédentes,
**caractérisé en ce que** :
l'on considère comme données des données ambiantes déterminées avant la collision d'un modèle ambiant.

7. Procédé selon l'une quelconque des revendications précédentes,
**caractérisé en ce que** :
on applique à tous les systèmes véhiculaires (9) un critère (15) décrivant l'expiration d'une période de temps prédéterminée après la collision.

8. Procédé selon l'une quelconque des revendications précédentes,
**caractérisé en ce que** :
l'on réalise une opération de diagnostic au moins d'une partie des systèmes véhiculaires (9), dans lequel, dans le cas de l'indisponibilité du système véhiculaire (9) comme résultat du diagnostic, le système véhiculaire (9) est coupé.

9. Procédé selon l'une quelconque des revendications précédentes,
**caractérisé en ce que** :
au moins un critère (15) comprend une mise en priorité, dans lequel les systèmes véhiculaires de plus grande priorité (9) sont coupés en fonction du courant disponible plus tard que les systèmes véhiculaires (9) de moindre priorité.

10. Procédé selon l'une quelconque des revendications précédentes,
**caractérisé en ce que** :
l'on détermine un plan d'action idéal réalisant au moins une action au moins d'un système véhiculaire (9) pour augmenter la sécurité et, en fonction des résultats d'un diagnostic au moins d'un système véhiculaire (9) concerné par le plan d'action, on détermine un plan d'action réalisable avec au moins une action maintenue au moins d'un système véhiculaire (9), dans lequel on utilise comme critère la présence d'une action affectée à un système véhiculaire considéré (9) dans le plan d'action réalisable.

11. Procédé selon l'une quelconque des revendications précédentes,
**caractérisé en ce que**,
dans le cas d'une indisponibilité du système
véhiculaire (7) valorisant les critères, le véhicule automobile (1) est coupé en totalité.

12. Procédé selon l'une quelconque des revendications précédentes,
**caractérisé en ce que**,
dans le cas d'au moins un système véhiculaire (9) non
coupé, un signal d'avertissement adressé aux forces de sauvetage est délivré.

13. Véhicule automobile (1) comprenant au moins un appareil de commande (8, 10) conçu pour réaliser un procédé selon l'une quelconque des revendications précédentes.
